# EUROPÄISCHE PATENTSCHRIFT

(11) **EP 1 133 808 B1**
(45) Veröffentlichungstag und Bekanntmachung des Hinweises auf die Patenterteilung: **12.01.2005**
(21) Anmeldenummer: 99948763.0
(22) Anmeldetag: 16.09.1999
(51) Int. Cl.: H01M 8/06, H01M 8/02, B60L 11/18, B60K 15/03, B01D 29/01

(54) **BEHÄLTER ZUR AUFNAHME EINES BETRIEBSMITTELS FÜR DEN BETRIEB VON BRENNSTOFFZELLEN**
CONTAINER FOR RECEIVING AN OPERATING MEANS FOR THE OPERATION OF FUEL CELLS
CONTENANT DESTINE A L'AGENT PERMETTANT LE FONCTIONNEMENT DE PILES A COMBUSTIBLE

(30) Priorität: 17.10.1998 DE 19847985
(43) Veröffentlichungstag der Anmeldung: 19.09.2001
(73) Patentinhaber: Ballard Power Systems AG, 73230 Kirchheim / Teck-Nabern (DE)
(72) Erfinder: POSCHMANN, Thomas, D-89073 Ulm (DE); ZUR MEGEDE, Detlef, D-73230 Kirchheim/Teck (DE)
(74) Vertreter: Beyer, Andreas, Dr.
(86) Internationale Anmeldenummer: PCT/EP1999/006854
(87) Internationale Veröffentlichungsnummer: WO 2000/024076

(56) Entgegenhaltungen:
- EP-A- 0 627 288
- EP-A- 0 677 417
- DE-A- 3 345 778
- DE-A- 19 731 250
- GB-A- 2 250 130
- US-A- 4 619 761
- PATENT ABSTRACTS OF JAPAN vol. 010, no. 234 (M-507), 14. August 1986 (1986-08-14) -& JP 61 067625 A (TOYOTA MOTOR CORP), 7. April 1986 (1986-04-07)
- PATENT ABSTRACTS OF JAPAN vol. 1997, no. 08, 29. August 1997 (1997-08-29) -& JP 09 092315 A (TOKYO ELECTRIC POWER CO INC:THE;KURITA WATER IND LTD), 4. April 1997 (1997-04-04)

## Beschreibung

Die Erfindung betrifft ein Brennstoffzellensystem nach dem Oberbegriff des Patentanspruchs 1. Ein solches System ist aus der GB-A-2 250 130 bekannt.

Energie in Brennstoffzellen wird durch eine kontrollierte Reaktion zwischen Wasserstoff und Sauerstoff gewonnen, bei dem an einer Membran innerhalb der Brennstoffzelle Wasserstoff- und Sauerstoffionen zu Wasser gebunden werden. Es ist bekannt, die Betriebsmittel gasförmig aus Tanks der Brennstoffzelle zuzuführen. Auch ist bekannt, das Betriebsmittel Sauerstoff aus der Umgebungsluft zu gewinnen.

Besonders bei der Verwendung von Brennstoffzellen in nicht-stationären Anlagen, wie etwa Fahrzeugen, bestehen sowohl Einschränkungen bezüglich dem zur Verfügung stehenden Raum als auch Sicherheitsbedenken hinsichtlich des Mitführens und/oder Lagerns größerer Volumina von Wasserstoffgas. Ebenso ist es vor allem für Brennstoffzeflenfahrzeuge notwendig, eine ausreichend flächendeckende Versorgung mit Betriebsmitteln, insbesondere Wasserstoff, zu gewährleisten.

Es wurde bereits vorgeschlagen, den notwendigen Wasserstoff aus einem wasserstoffhaltigen oder kohlenwasserstoffhaltigen Betriebsmittel zu gewinnen. Bevorzugt wird etwa flüssiges Methanol verwendet, wobei der Wasserstoff zur Reaktion günstigerweise in einem Gaserzeugungssystem durch Wasserdampf-Methanolreformierung gewonnen wird.

Ein wesentlicher Vorteil bei der Verwendung von Methanol besteht darin, daß Methanol an Tankstellen mit wesentlich weniger Aufwand verfügbar gemacht werden kann als beispielsweise Wasserstoffgas. Prototypen von Brennstoffzellenfahrzeugen werden mit chemisch hochreinem Methanol betrieben, da unerwünschte Beimengungen im Betriebsmittel chemisch aktive Bereiche vergiften können. Dagegen muß bei einem wirtschaftlichen Betrieb von Brennstoffzellenfahrzeugen, bei denen Methanol an Tankstellen getankt werden kann, wegen der üblichen Transportwege und Transportmethoden mit einem höheren Verschmutzungsgrad des Methanols gerechnet werden, als dies in den verschiedenen chemisch aktiven Bereichen der Brennstoffzellen verträglich ist.

Es ist die Aufgabe der Erfindung, ein Brennstoffzellensystem verfügbar zu machen, welches auch für Methanol mit geringem Reinheitsgrad geeignet ist.

Diese Aufgabe ist erfindungsgemäß durch ein Brennstoffzellensystem mit den Merkmalen des Anspruchs 1 gelöst. Weitere Vorteile und Ausgestaltungen der Erfindung gehen aus den weiteren Ansprüchen und der Beschreibung hervor.

Bei einem erfindungsgemäßen Brennstoffzettensystem wird das Betriebsmittel einem mit einem Durchlassmittel versehenen Behälter zugeführt, der stromauf vor dem Gaserzeugungssystem angeordnet ist. Das durch Durchlaßmittel gereinigte oder dort von einem Stoffgemisch chemisch umgesetzte Betriebsmittel wird durch den ersten oder zweiten Ausgang des Behälters dem Gaserzeugungssystem zugeführt.

In einer bevorzugten Ausführung ist das Durchlaßmittel zum Abtrennen von Verunreinigungen des Betriebsmittels vorgesehen.

In einer weiteren bevorzugten Ausführung ist das Durchlaßmittel im eingangsseitigen Innenraum mit einer ersten Art des Betriebsmittels und im eingangsfemen Innenraum mit einer zweiten Art des Betriebsmittels in Kontakt, wobei die erste Art des Betriebsmittels einen geringeren Reinheitsgrad aufweist als die zweite Art des Betriebsmittels.

In einer weiteren bevorzugten Ausführung weist die erste Art des Betriebsmittels eine andere chemische Zusammensetzung auf als die zweite Art des Betriebsmittels.

In einer weiteren bevorzugten Ausführung ist das Durchlaßmittel im eingangsseitigen Innenraum mit Betriebsmittel und im eingangsfernen Innenraum mit Verunreinigungen des Betriebsmittels in Kontakt.

Vorteilhaft ist, wenn das Durchlaßmittel eine semipermeable Membran und/oder ein Molekularsieb und/oder einen Keramikkörper und/oder ein Partikelfilter aufweist.

Zweckmäßig ist, im eingangsfemen Innenraum des Behälters eine Verbindung zu einer Vakuumpumpe vorzusehen. Durch eine einseitige Reduktion des Partialdrucks ist ein erhöhter Durchsatz des das Durchlaßmittel durchsetzenden Mediums möglich.

Eine weitere zweckmäßige Ausgestaltung ist, im ausgangsseitigen Bereich des Behälters eine Verbindung zu einer Spüleinrichtung vorzusehen. Der Durchsatz des das Durchlaßmittel durchsetzenden Mediums kann durch Spülen des eingangsfemen Innenraums mit einem Spülmedium erhöht werden.

In einer besonders bevorzugten Ausgestaltung weist das Betriebsmittel Methanol auf. Günstig ist vorzusehen, daß das gereinigte Methanol einem Gaserzeugungssystem zur Wasserstoffgewinnung zuführbar ist. Weiterhin günstig ist, daß die Verunreinigungen einer katalytischen Brennereinheit zuführbar sind. Damit lassen sich aus der Methanolreinigung gewonnene Kohlenwasserstoff-Verunreinigungen vorteilhaft für die Gewinnung von Prozeßwärme für etwaige Reformer, Verdampfer und/oder Gasreinigungseinheiten verwenden.

Bevorzugt ist die Verwendung des Behälters in einem Brennstoffzeflenfahrzeug. Eine weitere bevorzugte Verwendung des Behälters betrifft die Verwendung in einer Tankanlage für Brennstoffzellenfahrzeuge. In diesem Fall kann gereinigtes oder zumindest vorgereinigtes Betriebsmittel in das Fahrzeug abgefüllt werden.

Die Erfindung ist nachstehend anhand einer Zeichnung näher beschrieben, wobei
- Fig. 1: eine Prinzipdarstellung einer Anordnung mit einem Durchlaßmittel gemäß der Erfindung,
- Fig. 2: eine Ausgestaltung einer erfindungsgemäßen Anordnung mit einem Durchlaßmittel gemäß der Erfindung,
- Fig. 3: eine weitere Ausgestaltung einer erfindungsgemäßen Anordnung mit einem Durchlaßmittel gemäß der Erfindung und
- Fig. 4: eine weitere Ausgestaltung einer erfindungsgemäßen Anordnung zeigt.

Im folgenden wird die Erfindung anhand eines Behälters in einem Brennstoffzellenfahrzeug beschrieben, bei dem Methanol als Betriebsmittel verwendet wird. Die Erfindung ist jedoch nicht auf diesen Anwendungsfall beschränkt, sondern kann auch bei stationären Brennstoffzellensystemen oder nicht-stationären Brennstoffzellensystemen eingesetzt werden. Weiterhin sind auch andere wasserstoffhaltige flüssige oder gasförmige Medien statt Methanol verwendbar.

Für einen Großserien- und Flotteneinsatz von Brennstoffzellenfahrzeugen muß eine entsprechende Tankstelleninfrastruktur für geeignete Betriebsmittel, vorzugsweise Methanol, geschaffen werden. Da jedoch damit zu rechnen ist, daß für längere Zeit gleichzeitig Fahrzeuge mit Verbrennungsmotoren betrieben werden, ist davon auszugehen, daß der Ferntransport und die Regionalverteilung von Methanol über Pipelines und/oder Tankfahrzeuge erfolgt, über die auch Benzin und Diesel transportiert werden.

Daher ist mit einer entsprechenden Verunreinigung des Methanols mit höheren Kohlenwasserstoffen, etwa Alkane, Alkene, Aromate und anderen bis zu einem Anteil von einigen Volumenprozent (vol%), insbesondere bis zu 2 vol%, zu rechnen. Diese Kohlenwasserstoffe können zu einer Reduzierung der Aktivität des Reformierungskatalysators führen, mit dem Wasserstoff aus Methanol gewonnen werden soll und müssen daher vor dem Reformierungsprozeß aus dem Methanol entfernt werden.

Eine bevorzugte Lösung besteht darin, dergestalt verunreinigtes Methanol mit Hilfe eines Durchlaßmittels, insbesondere einer Membran, zu reinigen, welche insbesondere polare von unpolaren Stoffen trennen kann. Vorteilhafte Membranmaterialien sind Polymere, Molekularsiebe und/oder poröse Keramiken. Geeignet sind Durchlaßmittel, insbesondere Membranen, welche für einen Stoff ein höheres Durchlaßvermögen als für einen anderen Stoff aufweisen.

Der besondere Vorteil ist, daß eine Reinigung des Betriebsmittels vorzugsweise in einem Brennstoffzellenfahrzeug erfolgen kann. Alternativ kann auch eine entsprechende Reinigung des Betriebsmittels direkt an Tankstellen, z.B. in Zapfsäulen erfolgen. Insbesondere bei Methanol als Betriebsmittel werden als Verunreinigungen höhere Kohlenwasserstoffe extrahiert, welche vorteilhaft vor Ort der weiteren Verwendung in Ottokraftstoffen zugeführt werden können.

Eine weitere bevorzugte Lösung besteht darin, eine Membran zu verwenden, an welcher eine chemische Umsetzung von einem Stoffgemisch zum Betriebsmittel stattfinden kann, insbesondere kann dafür ein Molekularsieb verwendet werden.

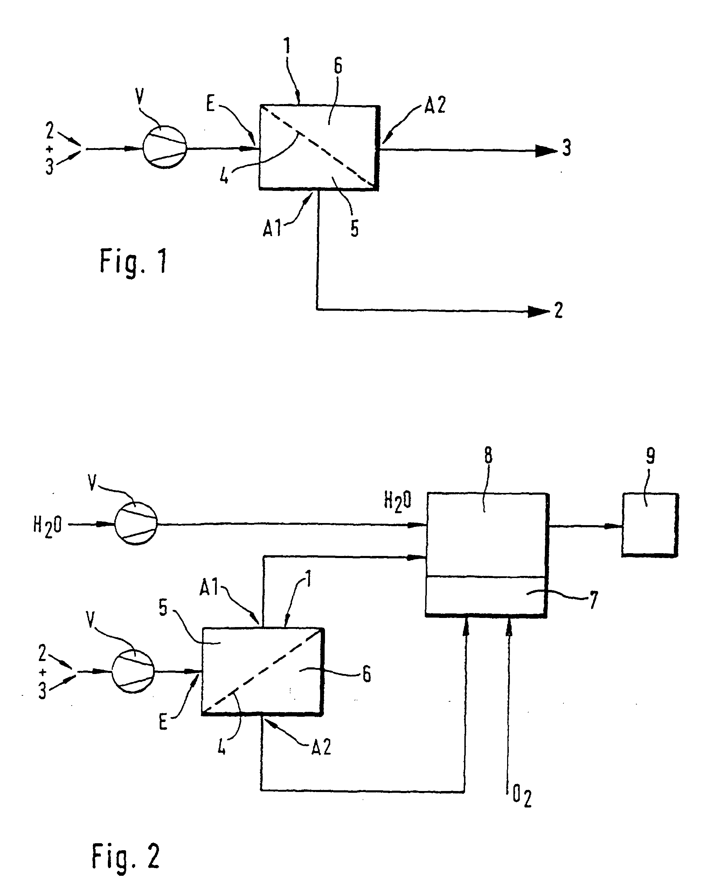

In Fig. 1 ist eine Prinzipdarstellung einer Anordnung mit einem Durchlaßmittel gemäß der Erfindung als Detailansicht skizziert. In einem Behälter 1 wird Methanol mit etwaigen Verunreinigungen 3 als vorzugsweise flüssiges Betriebsmittel 2 durch einen Eingang E zugeführt. Im Eingangsbereich kann ein Element V, vorzugsweise ein Ventil und/oder eine Pumpe, vorgesehen sein. Im Innenraum des Behälters 1 ist ein Durchlaßmittel 4 so angeordnet, das der Innenraum des Behälters 1 in mindestens zwei Bereiche, einem eingangsseitigen Innenraum 5 und einem eingangsfernen Innenraum 6 unterteilt wird. Im eingangsseitigen Innenraum 5 ist ein erster Ausgang A1, im eingangsfernen Innenraum 6 ist ein zweiter Ausgang A2 angeordnet, durch welche Ausgänge gereinigtes Betriebsmittel 2 und/oder Verunreinigungen 3 aus dem Behälter 1 entnehmbar sind.

Ist das Durchlaßmittel 4 durchlässiger für Verunreinigungen 3 des Betriebsmittels 2, können die Verunreinigungen 3 durch das Durchlaßmittel 4 permeieren und durch den Ausgang A2 abgeführt werden. Das Betriebsmittel 2 bleibt als Raffinat zurück und kann über den Ausgang A1 entnommen werden. Um den Durchsatz des Permeats zu erhöhen, kann zweckmäßigerweise der eingangsfernen Innenraum 6 mit einer Vakuumpumpe oder einer Spülvorrichtung, vorzugsweise einem Spülgas, verbunden werden. Durch den verringerten Partialdruck des Permeats im eingangsfernen Innenraum 6 kann der Durchsatz des Permeats durch das Durchlaßmittel 4 gesteigert werden.

Es ist jedoch auch möglich, ein Durchlaßmittel 4 einzusetzen, welches selektiv bevorzugt das Betriebsmittel 2 permeieren läßt. In diesem Fall kann das Betriebsmittel 2 aus dem Ausgang A2 und die Verunreinigungen 3 aus dem Ausgang A1 entnommen werden.

In Fig. 2 ist eine vorteilhafte Ausgestaltung einer erfindungsgemäßen Anordnung in einem Brennstoffzellen-Betriebssystem dargestellt. Methanol 2 mit Verunreinigungen 3 gelangt über ein Ventil V in den Eingang E des Behälters 1, welcher wie in Fig. 1 beschreiben, aufgebaut ist. Durchlaßmittel 4 unterteilt den Innenraum in einen eingangsseitigen Innenraum 5 und einen eingangsfernen Innenraum 6. Verunreinigungen 3 permeieren durch das Durchlaßmittel 4 und werden über den Ausgang A2 abgeführt. Die Verunreinigungen 3 werden sodann in eine katalytische Brennereinheit 7 geleitet und unter Zufuhr von Luft verbrannt. Die entstehende Wärme steht als Prozeßwärme für verschiedene Prozesse im System zur Verfügung.

Durch den Ausgang A1 im eingangsseitigen Innenraum 5 wird gereinigtes Methanol 2 einem Gaserzeugungssystem 8 zugeführt, dort mit zugeführten Wasser und/oder Wasserdampf befeuchtet und reformiert. Der aus dem Methanol gewonnene Wasserstoff wird dann einer Brennstoffzelle oder einem Brennstoffzellenstapel 9 zugeführt.

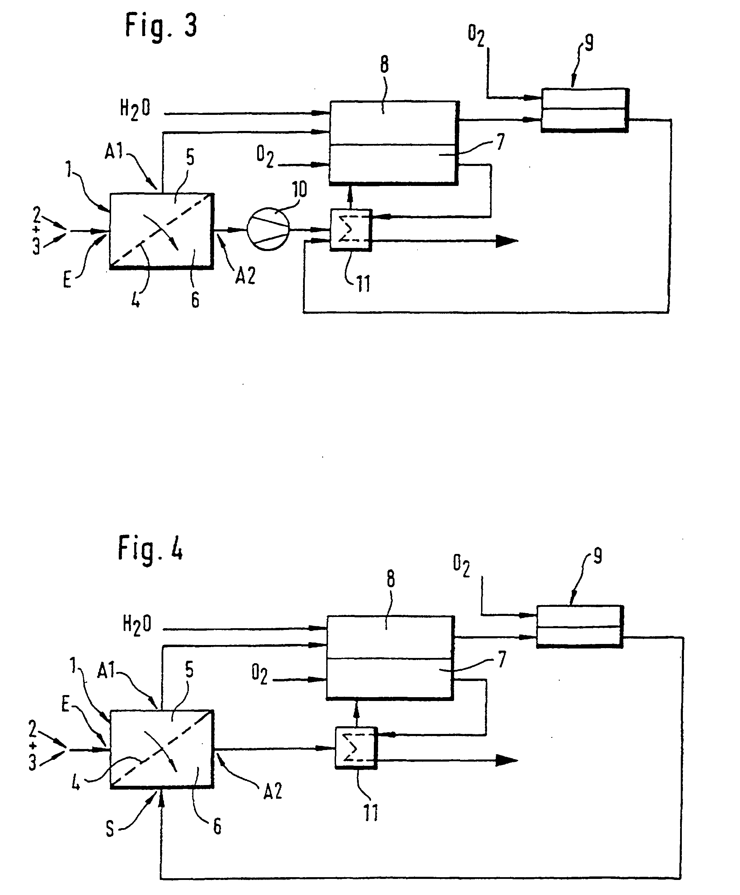

In Fig. 3 ist eine weitere vorteilhafte Ausgestaltung dargestellt. Methanol 2 mit Verunreinigungen 3 gelangt über ein Ventil oder eine Pumpe V in den Eingang E des Behälters 1, welcher wie in Fig. 1 und Fig. 2 beschreiben, aufgebaut ist. Durchlaßmittel 4 unterteilt den Innenraum in einen eingangsseitigen Innenraum 5 und einen eingangsfernen Innenraum 6. Durch den Ausgang A1 im eingangsseitigen Innenraum 5 wird gereinigtes Methanol 2 einem Gaserzeugungssystem 8 zugeführt, dort mit zugeführten Wasser und/oder Wasserdampf befeuchtet und reformiert. Der aus dem Methanol gewonnene Wasserstoff wird dann einer Brennstoffzelle oder einem Brennstoffzellenstapel 9 zugeführt.

Verunreinigungen 3 permeieren dagegen durch das Durchlaßmittel 4 und werden über den Ausgang A2 abgeführt. Um den Durchsatz der Verunreinigungen 3 zu erhöhen, wird vorzugsweise das Verfahren der Pervaporation eingesetzt. Der Permeand erfährt bei der Pervaporation eine Phasenumwandlung von flüssig nach gasförmig. Die Triebkraft für die Pervaporation einer Komponente ist wie bei anderen Membranverfahren der Gradient ihres chemischen Potentials. Bei der Pervaporation ist dieser Gradient bevorzugt über die Absenkung des Partialdrucks auf der Permeatseite unter den zur Betriebstemperatur gehörenden Sättigungsdampfdruck zu erreichen, wodurch es zu einer Verdampfung des Permeats bei der Desorption kommt. Zweckmäßigerweise wird der eingangsferne Innenraum 6 des Behälters 1 daher mit einer Vakuumpumpe 10 verbunden, welche den eingangsfernen Innenraum 6 evakuiert. Der Strom der abgetrennten Verunreinigungen 3 wird dann einer Heizeinrichtung 11 zum Vorwärmen der Verunreinigungen 3 zugeführt, welcher auch Abgas aus der Brennstoffzelle 9 und heißes Abgas aus dem katalytischen Brenner 7 zum Wärmetausch mit den Verunreinigungen zugeführt wird. Die erwärmten Verunreinigungen 3 werden aus der Heizeinrichtung 11 dem katalytischen Brenner 7 zugeführt, bzw. abgekühltes Abgas aus der Heizeinrichtung 11 abgeführt.

In Fig. 4 ist eine weitere vorteilhafte Ausgestaltung dargestellt. Der Aufbau entspricht im wesentlichen dem Aufbau der Fig. 3. Methanol 2 mit Verunreinigungen 3 gelangt über ein Ventil V in den Eingang E des Behälters 1. Durchlaßmittel 4 unterteilt den Innenraum in einen eingangsseitigen Innenraum 5 und einen eingangsfernen Innenraum 6. Durch den Ausgang A1 im eingangsseitigen Innenraum 5 wird gereinigtes Methanol 2 einem Gaserzeugungssystem 8 zugeführt, dort mit zugeführten Wasser und/oder Wasserdampf befeuchtet und reformiert. Der aus dem Methanol gewonnene Wasserstoff wird dann einer Brennstoffzelle oder einem Brennstoffzellenstapel 9 zugeführt.

Verunreinigungen 3 permeieren dagegen durch das Durchlaßmittel 4 und werden über den Ausgang A2 abgeführt. Um den Durchsatz der Verunreinigungen 3 zu erhöhen, wird vorzugsweise das Verfahren der Pervaporation eingesetzt. Der Partialdruck wird in diesem Fall nicht mittels einer Vakuumpumpe erniedrigt, sondern mittels einer Spüleinrichtung, indem vorzugsweise Anodenabgas aus der Brennstoffzelle 9 als Spülgas durch den Eingang S in den eingangsfernen Innenraum 6 des Behälters eingeführt wird.

Der Strom der abgetrennten Verunreinigungen 3 wird dann einer Heizeinrichtung 11 zum Vorwärmen zugeführt, welcher auch heißes Abgas aus dem katalytischen Brenner 7 zugeführt wird. Die erwärmten Verunreinigungen 3 werden aus der Heizeinrichtung 11 dem katalytischen Brenner 7 zugeführt, bzw. abgekühltes Abgas aus der Heizeinrichtung 11 abgeführt.

Wird ein Durchlaßmittel 4 gewählt, welches selektiv für das Betriebsmittel durchlässig ist, wird entsprechend der Ausgang A2 mit dem Gaserzeugungssystem 8 verbunden, während Ausgang A1 mit der katalytischen Brennereinrichtung 7 mittelbar oder unmittelbar zu verbinden ist.

Das Durchlaßmittel 4 kann auch aus mehreren selektiv durchlässigen Körpern gebildet sein, so daß verschiedene Stoffe aus dem zugeführten Medium vom gewünschten Betriebsmittel 2 selektiv abgetrennt werden können. Vorzugsweise sind mehrere Durchlaßmittel 4 hintereinandergeschaltet angeordnet. Es ist jedoch auch möglich, mehrere Durchlaßmittel 4 nebeneinander anzuordnen oder auch Durchlaßmittel 4 parallel und hintereinander anzuordnen. Damit kann die selektive Abtrennung mehrerer unterschiedlicher Stoffe vom Betriebsmittel optimiert werden.

Ein bevorzugtes Durchlaßmittel 4 ist ein Partikelfilter, vorzugsweise wird ein Partikelfilter zusätzlich zu einer weiteren Membran vorgesehen.

Vorteilhafte Ausführung von Durchlaßmitteln zur Abtrennung sauerstoffhaltiger Verbindungen, z.B. Methanol und/oder Dimethyläther und/oder Wasser, aus einem kohlenwasserstoffhaltigen Gemisch sind im folgenden kurz erläutert. Bevorzugtes Durchlaßmittel 4 ist eine Membran, wobei bevorzugte Membranmaterialien Celluloseacetat und/oder Celluloseacetat-Butyrat und/oder Polyethylen und/oder Polyvinyl-Acetat und/oder Polyvinylchlorid und/oder chloriertes Polyethylen und/oder Polyvinylchlorid und/oder Polyvinylidenchlorid aufweisen.

Eine bevorzugte Membran, bei der Methanol überwiegendes Permeat ist, weist zumindest Celluloseacetat und/oder Celluloseacetat-Butyrat auf.

Eine bevorzugte Membran, bei der Methanol überwiegendes Retenat ist, ist vorzugsweise aus der Gruppe von Polyvinylchlorid und/oder Polyvinylidenchlorid und/oder Polyethylen ausgewählt.

Je nach gewähltem Durchlaßmittel kann ein Zusatz von Verbindungen wie etwa Äther zur Verbesserung einer Permeation oder einer Reduzierung der Permeation von Methanol geeignet sein. Vorteilhaft kann ein Druckunterschied zwischen eingangsseitigem Innenraum 5 und einen eingangsfernem Innenraum 6 sein, wobei eingangsfern ein Unterdruck oder eingangsnah ein Überdruck erzeugt werden kann.

## Patentansprüche

1. Brennstoffzellensystem mit einem Gaserzeugungssystem, welches zur Wasserstoffgewinnung zur Versorgung von Brennstoffzellen (9) aus einem Betriebsmittel (2) vorgesehen ist, und einem Behälter (1), der einen Eingang (E) für ein zuzuführendes Medium, einen ersten Ausgang (A1) und einen zweiten Ausgang (A2) aufweist und durch mindestens ein Durchlaßmittel (4) zumindest in einen eingangsseitigen (5) und einen eingangsfernen Innenraum (6) unterteilt ist, wobei der erste Ausgang (A1) im eingangsseitigen Innenraum (5) und der zweite Ausgang (A2) im eingangsfemen Innenraum (6) angeordnet ist,
**dadurch gekennzeichnet, dass**
- das dem Behälter (1) zuzuführende Medium das Betriebsmittel (2) ist,
- der Behälter (1) stromauf vor dem Gaserzeugungssystem (8) angeordnet ist, und
- das durch das Durchlaßmittel (4) gereinigte oder dort von einem Stoffgemisch chemisch umgesetzte Betriebsmittel (2) durch den ersten oder zweiten Ausgang (A1, A2) dem Gaserzeugungssystem (8) zugeführt wird.

2. Brennstoffzellensystem nach Anspruch 1,
**dadurch gekennzeichnet, dass** das Durchlaßmittel (4) zum Abtrennen von Verunreinigungen (3) des Betriebsmittels (2) vorgesehen ist.

3. Brennstoffzellensystem nach Anspruch 1,
**dadurch gekennzeichnet, dass** das Durchlaßmittel (4) im eingangsseitigen Innenraum (5) mit einer ersten Art des zugeführten Betriebsmittels (2, 3) und im eingangsfernen Innenraum mit einer zweiten Art des zugeführten Betriebsmittels (2) in Kontakt ist.

4. Brennstoffzellensystem nach Anspruch 3,
**dadurch gekennzeichnet, dass** die erste Art des zugeführten Betriebsmittels (2, 3) einen geringeren Reinheitsgrad aufweist als die zweite Art des zugeführten Betriebsmittels (2).

5. Brennstoffzellensystem nach Anspruch 3,
**dadurch gekennzeichnet, dass** die erste Art des zugeführten Betriebsmittels (2, 3) einen andere chemische Zusammensetzung aufweist als die zweite Art des zugeführten Betriebsmittels (2).

6. Brennstoffzellensystem nach Anspruch 1 oder 2,
**dadurch gekennzeichnet, dass** das Durchlaßmittel (4) im eingangsfernen Innenraum mit Verunreinigungen (3) des Betriebsmittels (2) in Kontakt ist.

7. Brennstoffzellensystem nach Anspruch 1,
**dadurch gekennzeichnet, dass** das Durchlaßmittel (4) zumindest eine semipermeable Membran oder ein Molekularsieb oder einen Keramikkörper oder ein Partikelfilter aufweist.

8. Brennstoffzellensystem nach Anspruch 1,
**dadurch gekennzeichnet, dass** im eingangsfemen Innenraum (6) des Behälters (1) eine Verbindung zu einer Vakuumpumpe (10) vorgesehen ist.

9. Brennstoffzellensystem nach Anspruch 1,
**dadurch gekennzeichnet, dass** im eingangsfemen Innenraum (6) des Behälters (1) eine Verbindung zu einer Spüleinrichtung vorgesehen ist.

10. Brennstoffzellensystem nach Anspruch 1,
**dadurch gekennzeichnet, dass** das Betriebsmittel (2) Methanol aufweist.

11. Brennstoffzellensystem nach Anspruch 10,
**dadurch gekennzeichnet, dass** Methanol (2) dem Gaserzeugungssystem (8) zur Wasserstoffgewinnung zuführbar ist.

12. Brennstoffzellensystem nach Anspruch 2,
**dadurch gekennzeichnet, dass** die Verunreinigungen (3) einer katalytischen Brennereinheit (7) zuführbar sind.

13. Verwendung des Brennstoffzellensystems nach einem der vorhergehenden Ansprüche in einem Brennstoffzelienfahrzeug.

14. Verwendung des Brennstoffzellensystems nach einem der vorhergehenden Ansprüche in einer Tankanlage für Brennstoffzellenfahrzeuge.

## Claims

1. Fuel cell system comprising a gas generating system adapted to generate hydrogen for supplying fuel cells (9) from an operating material (2), and a container (1), which includes an inlet (E) for a medium to be supplied thereto, a first outlet (A1) and a second outlet (A2) and which is divided by at least one filtration means (4) into at least one inlet-side interior space (5) and one inlet-remote interior space (6), the first outlet (A1) being disposed within the inlet-side interior space (5) and the second outlet (A2) being disposed within the inlet-remote interior space (6),
**characterized in that**
- the medium to be supplied to the container (1) is the operating material (2),
- the container (1) is disposed upstream of the gas generating system (8), and
- the operating material (2) purged by the filtration means (4) or chemically converted therein by means of a mixture of substances is supplied to the gas generating system (8) by the first or second outlet (A1, A2).

2. Fuel cell system according to claim 1,
**characterized in that** the filtration means (4) is adapted to remove impurities (3) from the operating material (2).

3. Fuel cell system according to claim 1,
**characterized in that** the filtration means (4) within the inlet-side interior space (5) is in contact with a first kind of the supplied operating material (2, 3) and within the inlet-remote interior space is in contact with a second kind of the supplied operating material (2).

4. Fuel cell system according to claim 3,
**characterized in that** the first kind of the supplied operating material (2, 3) has a lesser degree of purity than the second kind of the supplied operating material (2).

5. Fuel cell system according to claim 3,
**characterized in that** the first kind of the supplied operating material (2, 3) has a different chemical composition than the second kind of the supplied operating material (2).

6. Fuel cell system according to claim 1 or 2,
**characterized in that** the filtration means (4) within the inlet-remote interior space is in contact with impurities (3) of the operating material (2).

7. Fuel cell system according to claim 1,
**characterized in that** the filtration means (4) comprises at least one of a semipermeable membrane, a molecular sieve, a ceramic body and a particle filter.

8. Fuel cell system according to claim 1,
**characterized in that** a connection to a vacuum pump (10) is provided within the inlet-remote interior space (6) of the container (1).

9. Fuel cell system according to claim 1,
**characterized in that** a connection to a flushing means is provided within the inlet-remote interior space (6) of the container (1).

10. Fuel cell system according to claim 1,
**characterized in that** the operating material (2) comprises methanol.

11. Fuel cell system according to claim 10,
**characterized in that** methanol (2) can be supplied to the gas generating system (8) for generating of hydrogen.

12. Fuel cell system according to claim 2,
**characterized in that** the impurities (3) can be supplied to a catalytic burner unit (7).

13. Use of the fuel cell system according to any one of the preceding claims in a fuel cell vehicle.

14. Use of the fuel cell system according to any one of the preceding claims in a refueling installation for fuel cell vehicles.

## Revendications

1. Système de piles à combustible pourvu d'un système de génération de gaz servant à la production de l'hydrogène destiné à alimenter des piles à combustible (9) à partir d'un agent combustible (2), et d'un contenant (1) lequel présente une entrée (E) pour l'introduction d'un fluide à amener, une première sortie (A1) et une deuxième sortie (A2) et est divisé par au moins un moyen d'admission (4) pour le moins en un espace intérieur situé du côté de l'entrée (5) et un espace intérieur situé à distance de ladite entrée (6), la première sortie (A1) étant disposée dans l'espace intérieur situé du côté de l'entrée (5) et la deuxième sortie (A2) dans l'espace intérieur situé à distance de l'entrée (6),
**caractérisé en ce que**
- l'agent combustible (2) est le fluide à amener au contenant (1),
- le contenant (1) est disposé en amont du système de génération de gaz (8), et
- l'agent combustible (2) nettoyé par le moyen d'admission (4) ou chimiquement transformé au niveau dudit moyen d'admission par l'intermédiaire d'un mélange est amené via la première ou la deuxième sortie (A1, A2) au système de génération de gaz (8).

2. Système de piles à combustible selon la revendication 1,
**caractérisé en ce que** le moyen d'admission (4) est destiné à la séparation des impuretés contenues dans l'agent combustible (2).

3. Système de piles à combustible selon la revendication 1,
**caractérisé en ce que** le moyen d'admission (4) se trouvant dans l'espace intérieur situé du côté de l'entrée (5) est en contact avec l'agent combustible (2, 3) d'une première sorte et, dans l'espace intérieur situé à distance de l'entrée (6), avec l'agent combustible (2) d'une deuxième sorte.

4. Système de piles à combustible selon la revendication 3,
**caractérisé en ce que** l'agent combustible (2, 3) de la première sorte présente un degré de pureté inférieur à celui de l'agent combustible (2) de la deuxième sorte.

5. Système de piles à combustible selon la revendication 3,
**caractérisé en ce que** l'agent combustible (2, 3) de la première sorte présente une composition chimique différente de celle de l'agent combustible (2) de la deuxième sorte.

6. Système de piles à combustible selon la revendication 1 ou 2,
**caractérisé en ce que** le moyen d'admission (4) se trouvant dans l'espace intérieur situé à distance de l'entrée est en contact avec des impuretés (3) de l'agent combustible (2).

7. Système de piles à combustible selon la revendication 1,
**caractérisé en ce que** le moyen d'admission (4) présente pour le moins une membrane semi-perméable ou un tamis moléculaire ou un corps céramique ou un filtre de particules.

8. Système de piles à combustible selon la revendication 1,
**caractérisé en ce qu'**une liaison vers une pompe à vide (10) est prévue dans l'espace intérieur situé à distance de l'entrée (6) du contenant (1).

9. Système de piles à combustible selon la revendication 1,
**caractérisé en ce qu'**une liaison vers un dispositif de rinçage est prévu dans l'espace intérieur situé à distance de l'entrée (6) du contenant (1).

10. Système de piles à combustible selon la revendication 1,
**caractérisé en ce que** l'agent combustible (2) renferme du méthanol.

11. Système de piles à combustible selon la revendication 10,
**caractérisé en ce que** du méthanol (2) peut être amené au système de génération de gaz (8) pour la production d'hydrogène.

12. Système de piles à combustible selon la revendication 2,
**caractérisé en ce que** les impuretés (3) peuvent être amenées à une unité de combustion catalytique (7).

13. Utilisation du système de piles à combustible selon l'une des revendications précédentes dans un véhicule automobile équipé de piles à combustible.

14. Utilisation du système de piles à combustible selon l'une des revendications précédentes dans une station d'avitaillement en carburant pour véhicules automobiles équipés de piles à combustible.
